# FASCICULE DE BREVET EUROPEEN

(11) **EP 1 731 889 B1**
(45) Date de publication et mention de la délivrance du brevet: **09.04.2008**
(21) Numéro de dépôt: 05300469.3
(22) Date de dépôt: 09.06.2005
(51) Int. Cl.: G01L 19/16, G02B 1/10

(54) **Utilisation d'un manomètre équipé d'une pellicule de protection**
Verwendung eines mit einer Schutzfolie angeordneten Druckwandlers
Use of a pressure gauge arranged with a protective film

(43) Date de publication de la demande: 13.12.2006
(73) Titulaire: FRO S.p.A., 37135 Verone (IT)
(72) Inventeur: Bendazzoli, Silvano, 37134 Verone (IT); Moretti, Alessandro, 25127 Brescia (IT); Arzenton, Marco, 37128 Verone (IT)
(74) Mandataire: Pittis, Olivier

(56) Documents cités:
- EP-A- 0 841 680
- US-A- 6 119 524
- US-A1- 2002 121 150
- US-B1- 6 630 228
- PATENT ABSTRACTS OF JAPAN vol. 2003, no. 12, 5 décembre 2003 (2003-12-05) & JP 2004 130762 A (TORAY IND INC), 30 avril 2004 (2004-04-30)
- PATENT ABSTRACTS OF JAPAN vol. 2003, no. 12, 5 décembre 2003 (2003-12-05) & JP 2003 291274 A (TEIJIN LTD), 14 octobre 2003 (2003-10-14)
- PATENT ABSTRACTS OF JAPAN vol. 2003, no. 12, 5 décembre 2003 (2003-12-05) & JP 2004 117790 A (TOPPAN PRINTING CO LTD), 15 avril 2004 (2004-04-15)
- PATENT ABSTRACTS OF JAPAN vol. 2003, no. 12, 5 décembre 2003 (2003-12-05) & JP 2004 284326 A (TORAY IND INC), 14 octobre 2004 (2004-10-14)

## Description

L'invention porte sur l'utilisation d'un manomètre de mesure de la pression d'un fluide équipé d'un moyen de protection apte à protéger la vitre transparente du manomètre contre l'action des solvants, ou des produits chimiques similaires susceptibles de la détériorer.

Un manomètre formé d'un corps comprenant des moyens d'indication de pression protégés par une vitre transparente de protection est par exemple décrit par le document US-A-2002/121150.

En réalisant une analyse des risques, on s'est aperçu que le risque majeur pour un manomètre est le risque de destruction par le feu.

De ce fait, la vitre transparente d'un manomètre, telle que définie par la norme EN 472 point 3.10, est habituellement réalisée en un matériau plastique ignifugé, c'est à dire résistant au feu, comme requis d'ailleurs par les normes EN 562 ou ISO 5171.

Cependant, les matériaux plastiques couramment utilisés ne sont pas, par contre, résistants aux solvants, en particulier à l'acétone ou au DMF.

Or, durant le remplissage ou a fortiori pendant les opérations de re-remplissage d'un récipient de fluide équipé d'un robinet ou robinet - détendeur de fluide comprenant un ou plusieurs manomètres, on effectue classiquement une opération d'acétonage dont le but est d'amener la quantité exacte de solvant dans le récipient, par exemple dans une bouteille de gaz.

En fonction du type de raccord de remplissage, de sa position et de la position du manomètre, il peut arriver que, durant les opérations de connexion / déconnexion des outils de remplissage, du solvant vient au contact de la vitre de protection transparente en plastique du manomètre, en rendant cette dernière opaque et en empêchant alors toute lecture subséquente par l'opérateur des indications de pression délivrées par le manomètre.

Pour éviter cette dégradation par un solvant, il a déjà été proposé d'utiliser des matériaux non - plastiques pour réaliser la vitre du manomètre. Cependant, une telle solution n'est pas idéale car, d'une part, elle augmente généralement le coût du manomètre et, d'autre part, les matériaux non - plastiques aptes à être utilisés sont souvent très fragiles, comme par exemple une vitre qui serait réalisée en verre.

Le problème à résoudre est dès lors de proposer un manomètre amélioré, pour robinet ou robinet - détendeur de gaz destiné à une utilisation avec de l'acétylène, qui ne soit pas sensible à une dégradation par un solvant ou tout autre produit chimique, susceptible de le détériorer, c'est-à-dire un manomètre dont la vitre transparente ne risque pas de devenir opaque si un solvant ou un autre produit chimique ou corrosif vient à son contact.

La solution de l'invention est alors l'utilisation d'au moins une pellicule transparente pour protéger la vitre de protection d' un manomètre formé d'un corps comprenant des moyens d'indication de pression protégés par une vitre transparente de protection en polymère ignifugé, ledit manomètre équipant le robinet au robinet-détendeur d'une bouteille d'acétylène, selon laquelle au moins une pellicule transparente est positionnée sur au moins une partie de la surface externe de la vitre de protection, ladite pellicule étant en matériau résistant aux solvants.

Selon le cas, le manomètre selon l'invention peut comprendre l'une ou l'autre des caractéristiques suivantes :
- il comporte plusieurs pellicules superposées les unes aux autres.
- la pellicule est en matériau résistant aux solvants et ignifugé.
- la pellicule est pellable.
- la pellicule comporte un adhésif sur au moins une surface.
- la pellicule recouvre toute la surface de la vitre.
- la pellicule est réalisée en un matériau choisi parmi les polymères.
- la pellicule comporte une ou plusieurs informations ou marquages.

Autrement dit, la solution de l'invention repose sur une protection de la vitre transparente en plastique (polymère) ignifugée contre toute détérioration ou agression par les solvants ou analogues, via l'application à la surface de la vitre d'un ou plusieurs films transparents de protection résistant aux solvants qui, même si eux-mêmes non ignifugés, développent en cas de feu une énergie négligeable et telle que la combustion ne se propage pas aux matériaux environnants.

Le (ou les) film de protection transparent peut être formé d'une pellicule unique ou alors de plusieurs pellicules superposées les unes aux autres, chaque pellicule étant résistante aux solvants ou aux produits chimiques, c'est à dire qu'elle permet d'offrir une protection contre les produits de différentes natures.

En cas de dégradation ou d'opacité de la pellicule de protection, celle-ci peut être facilement enlevée et remplacée par une pellicule neuve. Dans le cas d'une pluralité de pellicules superposées, il suffit de retirer la pellicule la plus externe ayant subi une détérioration. Préférentiellement, la ou les pellicules sont pellables, c'est à dire qu'elles peuvent être retirées succesivement l'une après les autres par simplement « décollement » de la pellicule supérieure.

L'invention est illustrée sur les figures ci-annexées parmi lesquelles :
- la figure 1 schématise une vue partielle et en coupe de la face avant d'un manomètre selon l'invention équipé d'une pellicule ou film de protection unique ; et
- la figure 2 est analogue à la ligne 1 mais schématise un manomètre selon l'invention équipé de plusieurs pellicules ou films de protection superposés ;

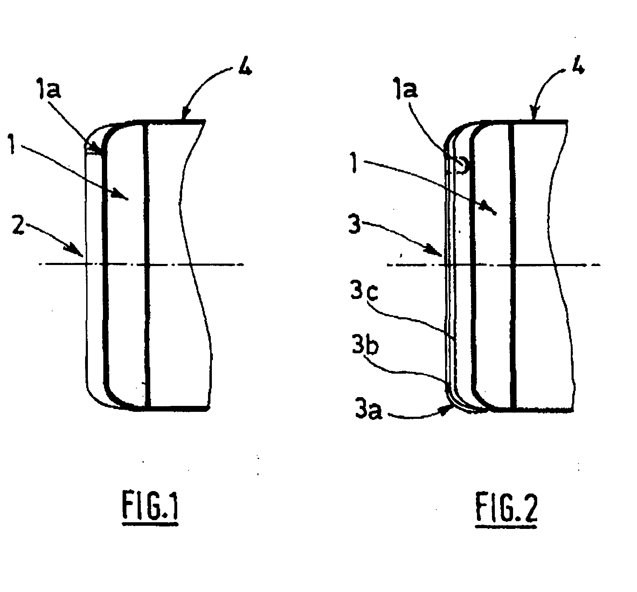

La figure 1 schématise une vue en coupe de la partie avant d'un manomètre 4 équipé d'une vitre de protection 1 transparente sur laquelle est positionnée une pellicule ou film 2 de protection contre les solvants selon l'invention.

La figure 2 est analogue à la figure 1, à l'exception du fait que, dans ce cas, la vitre transparente 1 est protégée par plusieurs pellicules 3, 3a, 3b, 3c transparentes superposées les unes aux autres, lesquelles peuvent être successivement retirées après leur dégradation ou détérioration.

La ou les pellicules 2, 3, 3a, 3b, 3c transparentes de protection des figures 1 et 2 peuvent être fixées soit par adhésion spontanée sur la surface de la vitre, soit par collage au moyen d'un adhésif ou analogue adéquat, soit par toute autre méthode de fixation, tel un film d'eau.

L'invention se rapporte à une utilisation dans le domaine du soudage ou analogue, notamment pour équiper les robinets, ou robinets - détendeurs montés sur des bouteilles d'acétylène couramment utilisées pour le travail thermique à la flamme, notamment le coupage ou soudage oxyacéthylénique.

En particulier, le fait de pouvoir enlever les pellicules selon les souhaits de l'utilisateur, notamment après usure, permet de réaliser un marquage temporaire sur la pellicule, par exemple pour donner à l'utilisateur une information de situations d'opérations à exécuter ou analogues.

Ceci est possible car la (ou les) pellicule de protection est plane et permet dès lors à l'utilisateur d'écrire sur sa surface ou d'y apposer un marquage par exemple avec un crayon indélébile ou similaire.

## Revendications

1. Utilisation d'au moins une pellicule (2, 3) transparente pour protéger la vitre (1) de protection d'un manomètre (4) formé d'un corps comprenant des moyens d'indication de pression protégés par une vitre (1) transparente de protection en polymère ignifugé, ledit manomètre (4) équipant le robinet ou robinet-détendeur d'une bouteille d'acétylène, dans laquelle ladite au moins une pellicule (2, 3) est en matériau résistant aux solvants et est positionnée sur au moins une partie de la surface externe (1a) de la vitre (1) de protection du manomètre (4).

2. Utilisation selon la revendication 1, **caractérisée en ce que** le manomètre (4) comporte plusieurs pellicules (3a, 3b, 3c) superposés les unes aux autres.

3. Utilisation selon l'une des revendications 1 ou 2, **caractérisée en ce que** la pellicule (2, 3) est pellable.

4. Utilisation selon l'une des revendications 1 à 3, **caractérisée en ce que** la pellicule comporte un adhésif sur au moins une surface.

5. Utilisation selon l'une des revendications 1 à 4, **caractérisée en ce que** la pellicule recouvre toute la surface de la vitre.

6. Utilisation selon l'une des revendications 1 à 5, **caractérisée en ce que** la pellicule est réalisée en un matériau choisi parmi les polymères.

7. Utilisation selon l'une des revendications 1 à 6, **caractérisée en ce que** la pellicule (2, 3) comporte une ou plusieurs informations ou marquages.

8. Utilisation selon l'une des revendications 1 à 7, **caractérisée en ce que** la pellicule (2,3) est en matériau ignifugé.

## Claims

1. Use of at least one transparent film (2, 3) for protecting the protective pane (1) of a pressure gauge (4) formed from a body comprising pressure indication means that are protected by a transparent protective pane (1) made of fire-retarded polymer, said pressure gauge (4) equipping the tap or tap/regulator of an acetylene bottle, in which the said at least one film (2, 3) is made of a solvent-resistant material and is positioned on at least part of the external surface (1a) of the protective pane (1) of the pressure gauge (4).

2. Use according to Claim 1, **characterized in that** the pressure gauge (4) has several films (3a, 3b, 3c) one superposed on another.

3. Use according to either of Claims 1 and 2, **characterized in that** the film (2, 3) is a peelable film.

4. Use according to one of Claims 1 to 3, **characterized in that** the film includes an adhesive on at least one face.

5. Use according to one of Claims 1 to 4, **characterized in that** the film covers the entire surface of the pane.

6. Use according to one of Claims 1 to 5, **characterized in that** the film is made of a material chosen from polymers.

7. Use according to one of Claims 1 to 6, **characterized in that** the film (2, 3) includes one or more markings or items of information.

8. Use according to one of Claims 1 to 7, **characterized in that** the film (2, 3) is made of a fire-retarded material.

## Patentansprüche

1. Verwendung von mindestens einer durchsichtigen Folie (2, 3) zum Schützen der Schutzscheibe (1) eines Druckmessers (4), der aus einem Gehäuse gebildet ist, das durch eine durchsichtige Schutzscheibe (1) aus feuerfestem Polymer geschützte Druckanzeigemittel aufweist, wobei der Druckmesser (4) das Ventil oder Druckminderventil einer Acetylenflasche ausrüstet, in der die mindestens eine Folie (2, 3) aus lösungsmittelbeständigem Material besteht und auf mindestens einem Teil der Außenfläche (1a) der Schutzscheibe (1) des Druckmessers (4) positioniert ist.

2. Verwendung nach Anspruch 1, **dadurch gekennzeichnet, dass** der Druckmesser (4) mehrere Folien (3a, 3b, 3c) aufweist, die übereinander geschichtet sind.

3. Verwendung nach einem der Ansprüche 1 oder 2, **dadurch gekennzeichnet, dass** die Folie (2, 3) abziehbar ist.

4. Verwendung nach einem der Ansprüche 1 bis 3, **dadurch gekennzeichnet, dass** die Folie auf mindestens einer Fläche ein Klebemittel umfasst.

5. Verwendung nach einem der Ansprüche 1 bis 4, **dadurch gekennzeichnet, dass** die Folie die gesamte Fläche der Scheibe bedeckt.

6. Verwendung nach einem der Ansprüche 1 bis 5, **dadurch gekennzeichnet, dass** die Folie in einem aus einem von Polymeren ausgewählten Material ausgeführt ist.

7. Verwendung nach einem der Ansprüche 1 bis 6, **dadurch gekennzeichnet, dass** die Folie (2, 3) eine oder mehrere Informationen oder Markierungen aufweist.

8. Verwendung nach einem der Ansprüche 1 bis 7, **dadurch gekennzeichnet, dass** die Folie (2, 3) aus feuerfestem Material besteht.
